# EUROPEAN PATENT APPLICATION

(11) **EP 1 577 696 A2**
(43) Date of publication of application: **21.09.2005**
(21) Application number: 05013442.8
(22) Date of filing: 23.10.2003
(51) Int. Cl.: G02B 26/08, G02B 6/35, H04Q 11/00

(54) **Optical switch**

(30) Priority: 24.10.2002 KR 2002065335; 29.11.2002 KR 2002075488
(62) Divisional of application: 03024431.3
(71) Applicant: LG ELECTRONICS INC., Seoul (KR)
(72) Inventor: Ji, Chang Hyeon, Seoul (KR); Yee, Young Joo, Bundang-Gu Seongnam Gyeonggi-Do (KR); Bu, Jong Uk, Seongnam Gyeonggi-Do (KR)
(74) Representative: Zech, Stefan Markus

(57) **Abstract**

In an optical switch including an input block in which light is incident; an output block for transferring input light from the input block; and a reflector for performing a switching operation by reflecting input light from the input block, wherein the input block and the output block are arranged so as to make input light from the input block and reflected light reflected on the reflector and transferred to the output block have an acute angle less than 90 degrees, and accordingly an optical switch capable of simplifying an assembly process and a package process and reducing a size of an optical switch package can be provided.

## Description

### BACKGROUND OF THE INVENTION

### 1. Field of the Invention

The present invention relates to an optical switch used for an optical communication network, and in particular to an optical switch capable of simplifying an assembly process, reducing a size thereof and minimizing power consumption.

### 2. Description of the Related Art

Recently, information-related techniques have made rapid progress with the development of high speed optical fiber communication techniques. In particular, with the advent of multimedia information including various types of data such as a moving picture, an aural signal and a character signal, etc., and rapid increase of subscribers based on a two-way interactive communication environment, etc., a communication network using the conventional copper transmission line has been faced with a limit, and an optical signal type communication network capable of performing high-speed transmission of high carrier frequency has been presented as an alternative plan.

In the optical communication network using light as an information signal, an interface connecting a subscriber with a relay or another subscriber is constructed as an optical connector module having an optical switch, a photo diode and a laser diode, etc.

Optical communication network data interface lately put to practical use consists of optical fiber as a transmission line; a fiber optic connector for connecting subscribers with each other; optical switches and an optic transmitter having a laser diode, etc. However, in order to construct the optical communication network data interface, because precision processing and lots of assembly process are required, it is expensive.

In particular, in case of the optical switch as the core part of the optical data interface, because a switching function is performed by arranging an optical axis by moving the front end of input and output side optical fibers mechanically, it has problems such as miniaturization intricacy, high power consumption and expensive price.

In order to solve the above-mentioned problems, various methods for implementing an optical device by integrating a micro mirror fabricated through a coherence process and a micro-machining process with optical fiber constructing an input block and an output block have been presented.

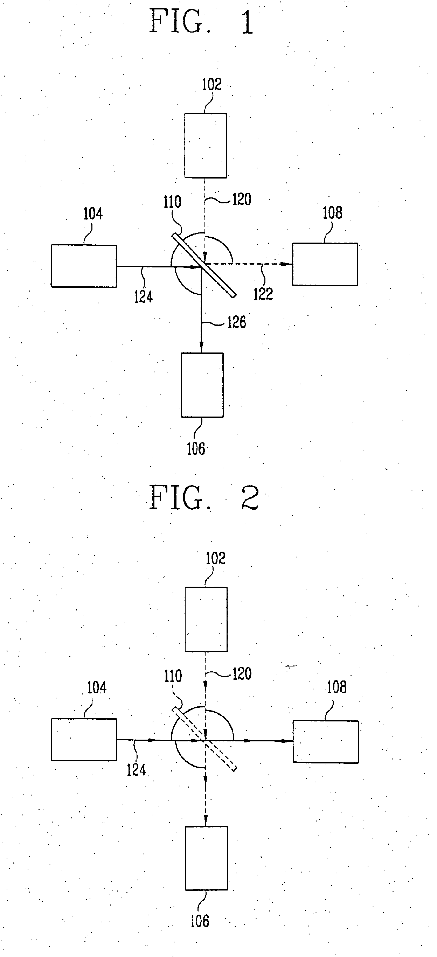

Figure 1 is a block diagram illustrating an optical switch in accordance with the conventional art.

The conventional optical switch includes input blocks 102, 104 in which light is incident; output blocks 106, 108 for transmitting/outputting input light from the input blocks 102, 104; a reflector 110 for performing a switching operation by reflecting input light from the input blocks 102 104; and a driving unit for reflecting or passing input light from the input blocks 102, 104 by operating the reflector 110.

The first input block 102 and the second input block 104 are arranged to be at right angle to each other, the first output block 106 and the second output block 108 are arranged to be at right angle to each other, herein, the first input block 102 and the first output block are arranged on the same plane, and the second input block 104 and the second output block 108 are arranged on the same plane.

And, a straight line connecting the first input block 102 with the first output block 106 and a straight line connecting the second input block 104 with the second output block 108 cross each other at the center of the reflector 110, and the reflector 110 is moved to a reflection position or a non-reflection position according to the operation of the driving unit.

The operation of the optical switch will be described. First, as depicted in Figure 1, when the reflector 110 is moved to a position at which input light is reflected, input light 120 from the first input block 102 is reflected onto the reflector 110, and reflected light 122 reflected onto the reflector 110 is transferred to the second output block 108. And, input light 124 from the second input block 104 is reflected onto the reflector 110, and reflected light 126 reflected onto he reflector 110 is transferred to the first output block 106.

Herein, an angle between the input light 120, 124 and the reflected light 122, 126 is determined by an angle between the input light 120, 124 and the reflector 110. Accordingly, the input block 102, 104 is arranged to be at right angle to the output block 106, 108, an angle between the input light 120, 124 and the reflector 110 is 45°, an angle between the input light 120, 124 and the reflector 122, 126 is 90°.

And, when the reflector 10 is moved to a position out of a light path of the reflector 10, as depicted in Figure 2, the input light 120 from the first input block 102 is directly transferred to the first output block 106, and the input light 124 from the second input block 104 is directly transferred to the second output block 108.

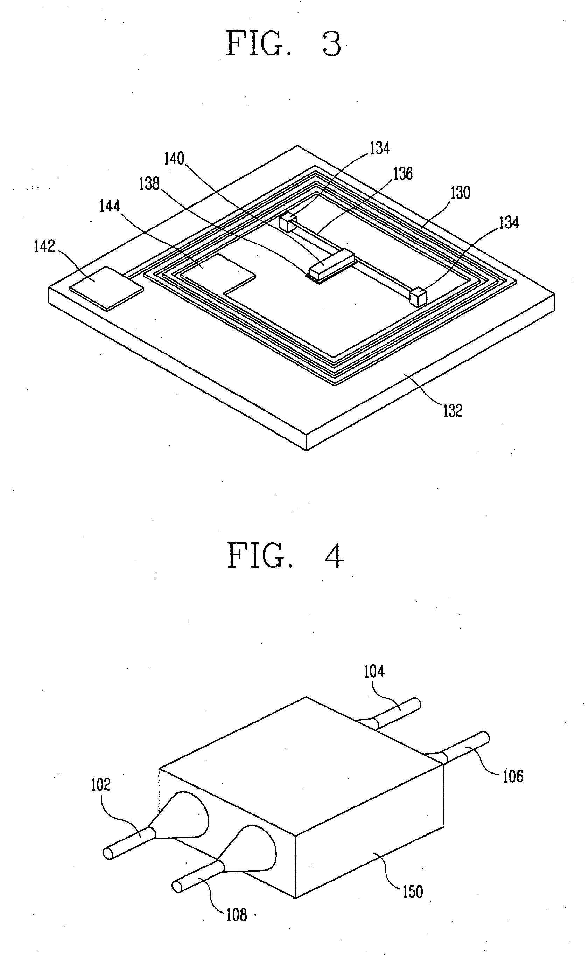

Figure 3 illustrates a reflector drive unit in accordance wit the conventional art.

The conventional drive unit includes a substrate 132 having a coil 130 wound on the top surface in the circumferential direction; supporting protrusions 134 projected from the surface of the substrate 132 so as to have a certain height at regular intervals; a spring 136 for generating an elastic force by being supported between the supporting protrusions 134; a moving member 138 in which one end is fixed to the spring 136, the other end has a free-end shape and is connected to the reflector 110; and a magnet 140 mounted on the moving member 138 so as to be operated up and down by being mutually operated with the coil 130 when power is applied to the coil 130.

The coil 130 is patterned as a shape wound on the surface of the substrate 132, and power connectors 142, 144 in which power is applied are respectively formed at both ends of the coil 130.

And, the magnet 140 is arranged at the center of the substrate 132, when power is applied to the coil 130, it is operated in the upper direction or the lower direction by a magnetic field formed between the coil 130 and the magnet 140, and accordingly the moving member 138 on which the magnet 140 is mounted is rotated.

The operation of the drive unit will be described. When power is applied to the coil 130 through the power connectors 142, 144, by the mutual operation of the coil 130 and the magnet 140, the magnet 140 is operated in the upper direction and the lower direction. According to that, while the free end of the moving member 138 on which the magnet 140 is fixed is rotated in the upper direction or the lower direction centering around a point fixed to the spring 136, the reflector 110 is driven to a position at which the input light 120, 124 is not reflected.

And, when power applied to the coil 130 is cut off, by the elastic force of the spring 136, the moving member is returned to an initial position, herein, the reflector 110 is located on a position at which the input light 120, 124 is reflected.

However, in the conventional optical switch, the input block 102, 104 is at right angle to the output block 106, 108, a light input angle and a light output angle are respectively 90°, assembly process and packaging process for integrating parts such as optical fiber, etc. to an optical device fabricated by micro-machining may be intricate.

In particular, as depicted in Figure 4, when an optical switch package is constructed, the first input block 102 and the second input block 104 are horizontally arranged on a surface of a package main body 150, and the first output block 106 and the second output block 108 are horizontally arranged on the opposite surface. Herein, optical fiber arranged at right angle has to be horizontally arranged to reduce a size of a whole package, however, it is difficult due to radius curvature of optical fiber itself.

In addition, in the conventional drive unit, after moving the reflector 110, in order to maintain that state, power has to be continually supplied to the coil 130, and accordingly power consumption is big.

### SUMMARY OF THE INVENTION

In order to solve the above-mentioned problem, it is an object of the present invention to provide an optical switch capable of simplifying an assembly process and a package process and reducing a size of an optical switch package by improving an arranging method of an input block and an output block.

It is another object of the present invention to provide an optical switch capable of minimizing power consumption of a drive unit by applying power to the drive unit and maintaining a moved state of a reflector without using power.

In order to achieve the above-mentioned objects, an optical switch includes an input block in which light is incident; an output block to which input light from the input block is transferred; and a reflector for performing a switching operation by reflecting input light from the input block; wherein the input block and the output block are arranged so as to make input light from the input block and reflected light reflected by the reflector and transferred to the output block have an acute angle less than 90 degrees.

The input block consists of a first input block and a second input block arranged to have an obtuse angle greater than 90 degrees therebetween, and the output block consists of a first output block and a second output block arranged to have an obtuse angle greater than 90 degrees therebetween.

The first input block and the second output block are arranged at a side of a package main body to have an acute angle therebetween, and the second input block and the first output block are arranged at the other side of the package main body to have an acute angle therebetween.

Plural first input blocks and plural second input blocks are arranged to have an obtuse angle greater than 90 degrees therebetween, plural first output blocks and plural second output blocks are arranged to have an obtuse angle greater than 90 degrees, and the reflector is arranged at all positions at which a straight line between the first input blocks and the first output blocks and a straight line between the second input blocks and the second output blocks cross each other.

An optical switch includes an input block in which light is incident; an output block to which input light from the input block is transferred; and a reflector for performing a switching operation by reflecting input light from the input block;
wherein the input block and the output block are arranged so as to make input light from the input block and reflected light reflected by the reflector and transferred to the output block have an obtuse angle greater than 90 degrees.

The optical switch further includes a drive unit for moving the reflector to a direction reflecting input light and a direction not reflecting input light.

The drive unit includes a moving member connected with the reflector to move the reflector; a spring for supporting the moving member and making the moving member return to an initial state; and an electromagnetic force generator for moving the moving member when a current is applied and maintaining the moved state of the moving member when a current is not continually applied.

The electromagnetic force generator includes a core arranged at right angles to the free end of the moving member on which the magnet is adhered, made of a ferromagnetic material in order to rotate the moving member on which the magnet is fixed by generating a magnetic force when current is applied to a coil and maintain the moving member-rotated state by maintaining an electromagnetic force when the current applied to the coil is cut off; a coil wound around the core to apply a current.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 illustrates a construction of an optical switch in accordance with the conventional art;
Figure 2 illustrates an operating state of the optical switch in accordance with the conventional art;
Figure 3 illustrates an optical switch drive unit in accordance with the conventional art;
Figure 4 is a perspective view illustrating an optical switch in accordance with the conventional art;
Figure 5 illustrates a construction of an optical switch in accordance with a first embodiment of the present invention;
Figure 6 illustrates an operating state of an optical switch in accordance with the first embodiment of the present invention;
Figure 7 is a perspective view illustrating an optical switch package in accordance with the first embodiment of the present invention;
Figure 8 illustrates a construction of an optical switch in accordance with a second embodiment of the present invention;
Figure 9 illustrates an operating state of an optical switch in accordance with the second embodiment of the present invention;
Figure 10 is a perspective view illustrating an optical switch package in accordance with the second embodiment of the present invention;
Figure 11 illustrates a construction of an optical switch in accordance with a third embodiment of the present invention;
Figure 12 illustrates a construction of an optical switch in accordance with a fourth embodiment of the present invention;
Figure 13 illustrates a construction of a reflector drive unit of an optical switch in accordance with an embodiment of the present invention;
Figure 14 is a hysterisis curve showing an operating principle of an optical switch drive unit in accordance with an embodiment of the present invention;
Figure 15 is a graph showing variation of magnetic field intensity and magnetic flux density about a pulse input current of the drive unit in accordance with the embodiment of the present invention;
Figure 16 illustrates a construction of an optical switch drive unit in accordance with another embodiment of the present invention; and
Figures 17 ~ 19 are sectional views illustrating an installation structure of a yoke for providing a line path of magnetic force to an electromagnetic force generator of an optical switch drive unit in accordance with the present invention.

### DETAILED DESCRIPTION OF THE PREFERRED EMBODIMENT

Hereinafter, the preferred embodiment of an optical switch in accordance with the present invention will be described with reference to accompanying drawings.

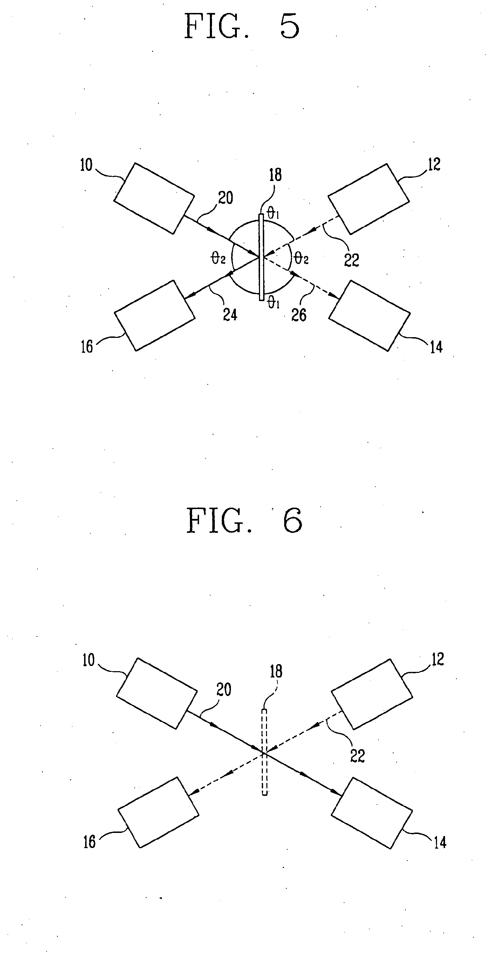

Figure 5 illustrates a construction of an optical switch in accordance with a first embodiment of the present invention.

The optical switch in accordance with the first embodiment of the present invention includes input blocks 10, 12 in which light is incident; output blocks 14, 16 to which input light form the input blocks 10, 12 is transferred; a reflector 18 for performing a switching operation by reflecting input light from the input blocks 10, 12; and a drive unit for reflecting or passing input light from the input blocks 10, 12 by operating the reflector 18.

The input blocks 10, 12 are arranged to have an obtuse angle θ1 greater than 90° therebetween, and the output blocks 14, 16 are arranged to have an obtuse angle θ1 greater than 90° therebetween. And, the first input block 10 and the first output block 14 are arranged on the same plane, and the second input block 12 and the second output block 16 are arranged on the same plane.

Accordingly, the first input block 10 and the second output block 16 are arranged to have an acute angle θ2 less than 90° therebetween, and the second input block 12 and the first output block 14 are arranged to have an acute angle θ2 less than 90° therebetween.

The reflector 18 is installed at a position at which a straight line between the first input block 10 and the first output block 14 and a straight line between the second input block 12 and the second output block 16 cross each other, and it is moved to a position reflecting input light from the first and second input blocks 10, 12 or a position not reflecting input light.

The operation of the optical switch in accordance with the first embodiment of the present invention will be described.

First, as depicted in Figure 5, when the reflector 18 moves to a position reflecting input light 20, 22 according to the operation of the drive unit, the input light 20 from the first input block 10 is reflected onto the reflector 18, and reflected light from the reflector 18 is transferred to the second output block 16. And, the input light 22 from the second input block 12 is reflected onto the reflector 18, and reflected light from the reflector 18 is transferred to the first output block 14. Herein, an angle between the input light 20, 22 and the reflected light 24, 26 is an acute angle θ2 less than 90°.

And, when the reflector 18 is moved to a position not reflecting input light according to the operation of the drive unit, as depicted in Figure 6, the input light 20 from the first input block 10 is directly transferred to the first output block 14, and the input light 22 from the second input block 12 is directly transferred to the second output block 16.

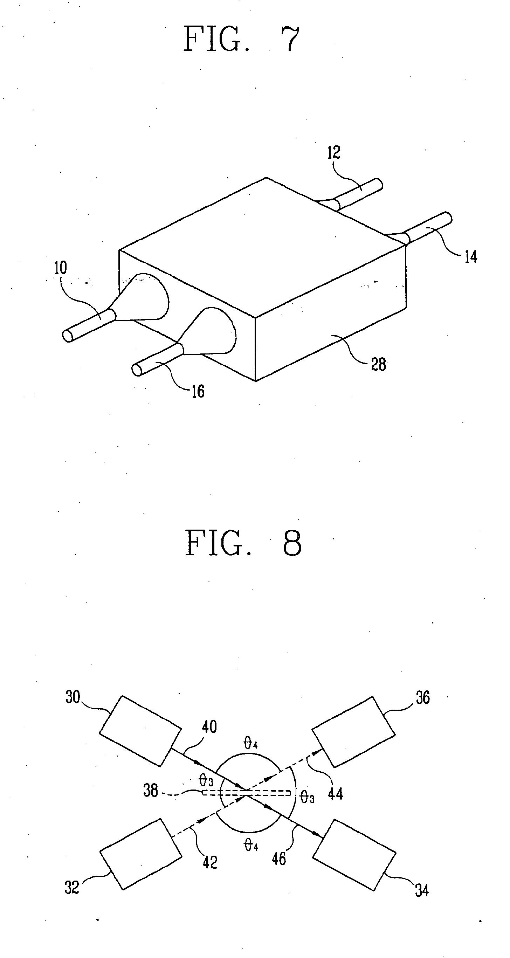

As depicted in Figure 7, when the optical switch is constructed a light switch package, the first input block 10 and the second output block 16 are arranged at a side of a package main body 28, and the second input block 12 and the first output block 14 are arranged on the opposite side.

Herein, because the first input block 10 and the second output block 16 have an acute angle therebetween, the second input block 12 and the first output block 14 have an acute angle therebetween, it is easy to arrange them respectively on both sides of the package main body 28, and accordingly it is possible to simplify an assembly process and a package process and minimize a size of a package.

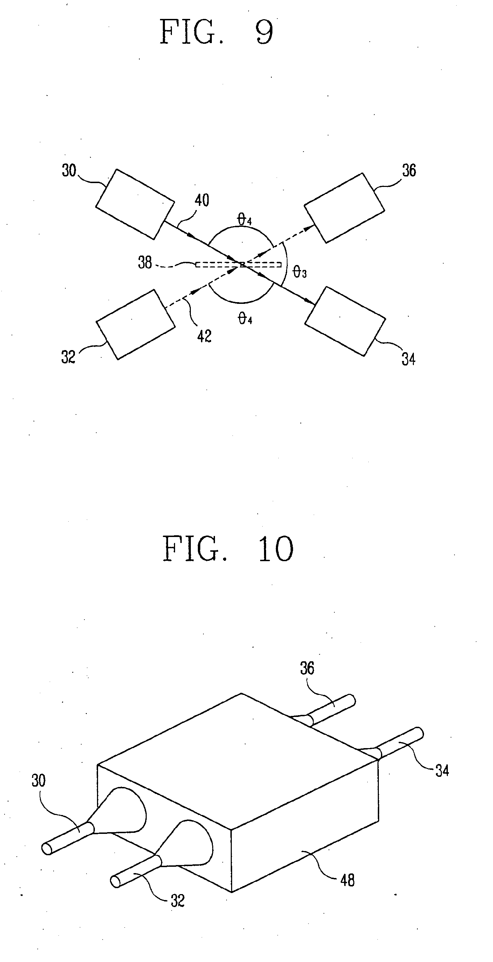

Figure 8 illustrates a construction of an optical switch in accordance with a second embodiment of the present invention; Figure 9 illustrates an operating state of an optical switch in accordance with the second embodiment of the present invention; and Figure 10 is a perspective view illustrating an optical switch package in accordance with the second embodiment of the present invention.

The input blocks 30, 32 are arranged to have an obtuse angle θ1 greater than 90° therebetween, and the output blocks 14, 16 are arranged to have an obtuse angle θ1 greater than 90° therebetween. And, the first input block 10 and the first output block 14 are arranged on the same plane, and the second input block 12 and the second output block 16 are arranged on the same plane.

Accordingly, the first input block 30 and the second output block 36 are arranged to have an obtuse angle θ4 greater than 90° therebetween, and the second input block 32 and the first output block 34 are arranged to have an obtuse angle θ4 greater than 90° therebetween.

The operation of the optical switch in accordance with the second embodiment of the present invention will be described. First, as depicted in Figure 8, when a reflector 38 is moved to a position reflecting input light according to the operation of the drive unit, input light 40, 42 from a first input block 30 and a second input block 32 is reflected onto the reflector 38, and reflected light 44, 46 from the reflector 38 is transferred to a second output block 36 and a first output block 34. Herein, an angle between the input light 40, 42 and the reflected light 44, 46 is an obtuse angle θ4 greater than 90°.

And, when the reflector 38 is moved to a position not reflecting input light according to the operation of the drive unit, as depicted in Figure 9, the input light 40 from the first input block 30 is directly transmitted to the first output block 34, and the input light 42 from the second input block 32 is directly transferred to the second output block 36.

In the optical switch in accordance with the second embodiment of the present invention, as depicted in Figure 10, when it is constructed as an optical switch package, the first input block 30 and the second input block 32 are arranged at a side of the package main body 48, and the first output block 34 and the second output block 36 are arranged at the opposite side.

Herein, because the first input block 30 and the second input block 32 have an acute angle therebetween, the first output block 34 and the second output block 36 have an acute angle therebetween, it is easy to arrange them respectively on both sides of the package main body 48, and accordingly it is possible to simplify an assembly process and a package process and minimize a size of a package.

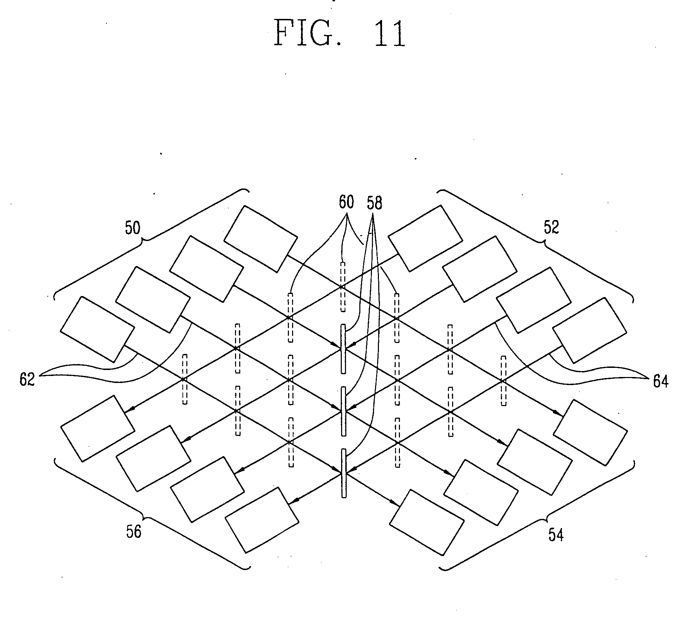

Figure 11 illustrates a construction of an optical switch in accordance with a third embodiment of the present invention.

In the optical switch in accordance with the third embodiment of the present invention, plural first input blocks 50 and plural second input blocks 52 are arranged to have an obtuse angle greater than 90°, and plural first output blocks 54 and plural second output blocks 56 are arranged to have an obtuse angle greater than 90°. And, the first input blocks 56 and the first output blocks 54 are arranged on the same plane so as to be corresponded respectively, and the second input blocks 52 and the second output blocks 56 are arranged on the same plane so as to be corresponded respectively.

Herein, four first input blocks 50 and four second input blocks 52 are arranged at regular intervals, and four first output blocks 54 and four second output blocks 56 are arranged at regular intervals. And, the first input blocks 50 and the second output blocks 56 are arranged to have an acute angle less than 90°, and the second input blocks 52 and the first output blocks 54 are arranged to have an acute angle less than 90°.

Reflectors 58, 60 are arranged at all positions at which a straight line between the first input blocks 50 and the first output blocks 54 and a straight line between the second input blocks 52 and the second output blocks 56 cross each other, and the reflectors 58, 60 reflect input light from a selected one among the first and second input blocks 50, 52.

As described in the Figure 11, in the optical switch in accordance with the third embodiment of the present invention, the reflectors 58 shown as a solid line are moved to a position reflecting input light, and the reflectors 60 shown as a dotted line are moved to a position not reflecting input light. According to that, part of input light 62 from the first input blocks 50 is reflected by the reflectors 58 and is transferred to the second output block 56, part is not reflected and is directly transferred to the first output block 54. And, part of input light 64 from the second input blocks 52 is reflected by the reflectors 58 and is transferred to the first output block 56, part is not reflected and is directly transferred to the second output block 56.

In the optical switch in accordance with the third embodiment of the present invention, because the first input blocks 50 and the second output blocks 56 are arranged to have an acute angle, the second input blocks 52 and the first output blocks 54 are arranged to have an acute angle, when it is constructed as a package, the first input blocks 50 and the second output blocks 56 are arranged at a side, the second input blocks 52 and the first output blocks 54 are arranged at the other side, and accordingly it is possible to reduce a size of a package.

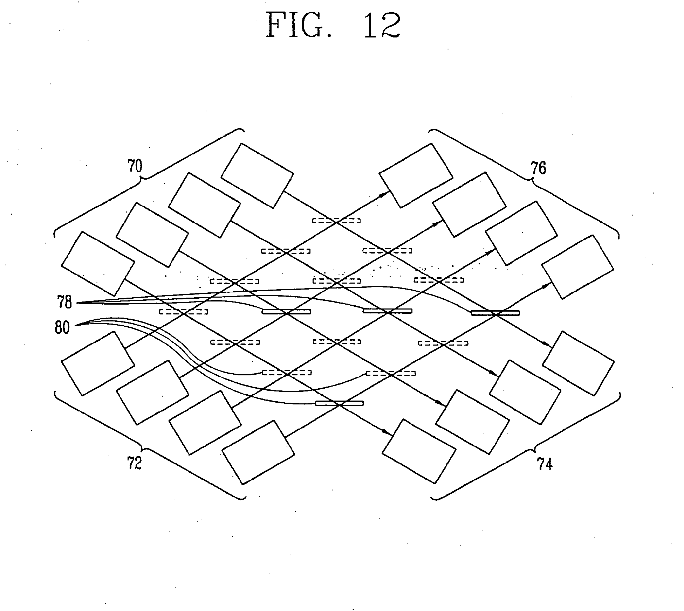

Figure 12 illustrates a construction of an optical switch in accordance with a fourth embodiment of the present invention.

In the optical switch in accordance with the fourth embodiment of the present invention, plural first input blocks 70 and plural second input blocks 72 are arranged to have an acute angle less than 90°, and plural first output blocks 74 and plural second output blocks 76 are arranged to have an acute angle less than 90°. And, the first input blocks 70 and the first output blocks 74 are arranged on the same plane so as to be corresponded respectively, and the second input blocks 72 and the second output blocks 76 are arranged on the same plane so as to be corresponded respectively.

Herein, four first input blocks 70 and four second input blocks 72 are arranged at regular intervals, and four first output blocks 74 and four second output blocks 76 are arranged at regular intervals.

Reflectors 78, 80 are arranged at all positions at which a straight line between the first input blocks 70 and the first output blocks 74 and a straight line between the second input blocks 72 and the second output blocks 76 cross each other.

In the optical switch in accordance with the fourth embodiment of the present invention, because the first input blocks 70 and the second input blocks 72 are arranged to have an acute angle, the first output blocks 76 and the second output blocks 74 are arranged to have an acute angle, when it is constructed as a package, the first input blocks 70 and the second input blocks 72 are arranged at a side, the first output blocks 74 and the second output blocks 76 are arranged at the other side, and accordingly it is possible to reduce a size of a package.

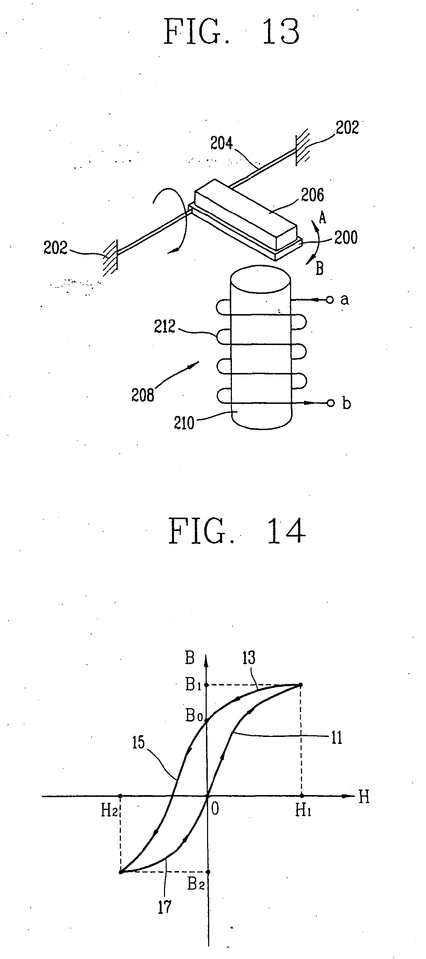

Figure 13 illustrates a construction of a reflector drive unit of an optical switch in accordance with an embodiment of the present invention.

In the reflector drive unit of the optical switch in accordance with the embodiment of the present invention includes a moving member 200 connected to the reflectors 18, 38 to operate them; a spring 24 in which both ends are supported by a package main body 202 and one end is fixed to the end of the moving member 200 in order to provide an elastic force for making the moving member 200 return to an initial state; a magnetic body fixed to the moving member 204; and a electromagnetic force generator 208 arranged at a side of the moving member 200 to operate the magnetic body 206 when power is applied.

Herein, the spring 204 is for providing an elastic force to make the moving member 200 return to an initial state, it is preferable to use a plate type spring generating twisted elastic force when the moving member 200 is rotated.

One end of the moving member 200 is fixed to the center of the spring 204, the other end thereof is horizontally connected to the reflectors 18, 38, and it moves the reflectors 18, 38 to a reflection possible position or a reflection impossible position while being rotated by the operation of the electromagnetic force generator 208.

The electromagnetic force generator 208 includes a core 210 arranged vertically at a bottom of an free end of the moving member 206 and a coil 212 wound around a core, when current is applied to the coil 212, the core 210 is magnetized and generates a line of magnetic force, when intensity of the current applied to the coil 212 is great sufficiently, magnetization of the core 210 is strongly proceeded and is in a saturated magnetization state. Then, if current does not flow on the coil 212, the core maintains a magnetized state and emits a line of magnetic force continually.

According to the electromagnetic force generated by the electromagnetic force generator 208, the magnetic body 206 moves upwardly or downwardly. Then, the free end of the moving member 200 on which the magnetic body 206 is mounted is rotated, and accordingly the reflectors 18, 38 are moved.

Herein, the core 210 is made of ferromagnetic material having a relative dielectric constant not less than 1.

And, when the magnetic body 206 is made of a weekmagnetic material, because of arranging characteristics affected by a magnetic field generated in the electromagnetic force generator, it has a moving force.

In addition, as another embodiment of the ferromagnetic material 206, in case of constructing the magnetic body 206 as a permanent magnet, when one end of the core of the electromagnetic force generator is N pole, the other end is S pole, pushing force is generated therebetween, and accordingly the magnetic body 206 is rotated.

The operation of a drive unit in accordance with the present invention will be described.

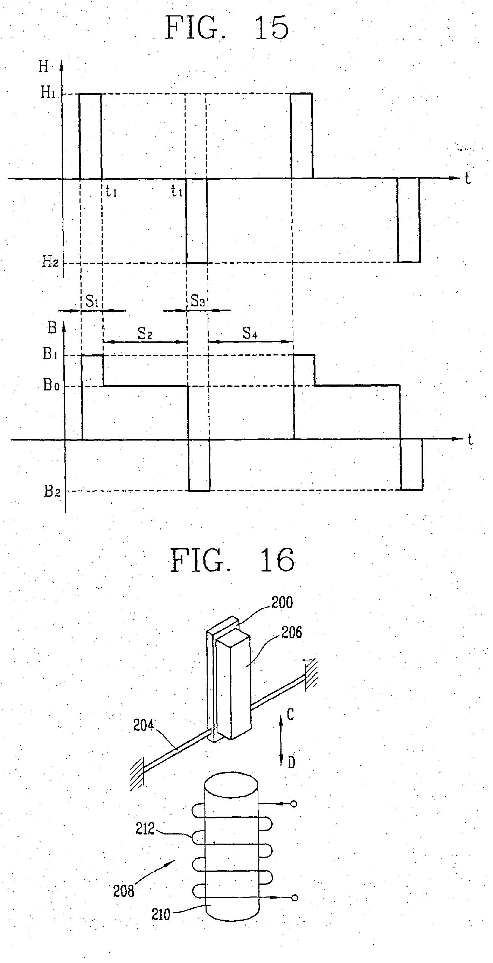

Figure 14 is a hysterisis curve showing an operating principle of an optical switch drive unit in accordance with an embodiment of the present invention; and Figure 15 is a graph showing variation of magnetic field intensity and magnetic flux density about a pulse input current of the drive unit in accordance with the embodiment of the present invention.

Graph in Figure 14 shows a correlation between a magnetic filed intensity H and a magnetic flux density B of a magnetic filed formed when current is applied to the coil. When magnetic field intensity H is increased as H₁ and is reduced as 0, a magnetic flux density B is varied along a path 11 and a path 13 and finally has a B₀ value. And, when magnetic field intensity H is reduced as H₂ and is increased as 0, a magnetic flux density B is varied along a path 15 and a path 17 and finally has a 0 value. Accordingly, when the magnetic field having a size of H₁, H₂ is repeatedly applied as a pulse, magnetic flux density as B0 and 0 can be obtained.

By the above-mentioned operational principle, when current is applied to the coil, a line of magnetic force is generated from the core 210 as the ferromagnetic material, by the line of magnetic force generated from the core 210, the moving member at which the magnetic body 206 is fixed is rotated in an arrow A or an arrow B, and accordingly the reflectors 18, 38 are moved to the reflection possible position or the reflection impossible position.

In that state, when current supplied to the coil 212 is cut off, by the above-mentioned principle, the core generates a line of magnetic force continually, and accordingly the moving member 200 maintains the rotated state.

And, in order to make the moving member 200 return to the initial state, by applying current to the coil 212 in the opposite direction, the moving member 200 is rotated in the opposite direction and maintains the initial state by the elastic force of the spring 204.

Figure 16 illustrates a construction of an optical switch drive unit in accordance with another embodiment of the present invention.

The optical switch drive unit in accordance with another embodiment of the present invention has a construction same with that of the embodiment of the present invention. Only the moving member 206 and the electromagnetic force generator 208 are arranged on the same straight line, when power is applied to the coil 212 of the electromagnetic force generator 208, the moving member 200 performs a linear reciprocating motion up and down as shown as arrows C, D.

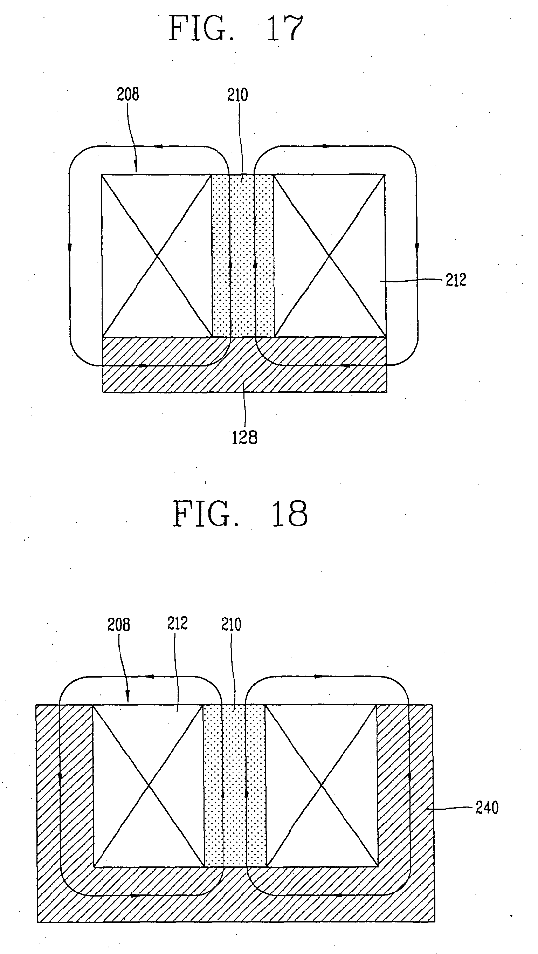

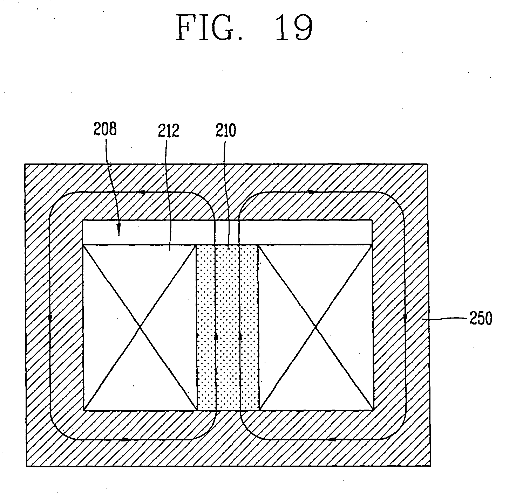

Figures 17 ~ 19 are sectional views illustrating an installation structure of a yoke for providing a line path of magnetic force to an electromagnetic force generator of an optical switch drive unit in accordance with the present invention. In Figure 17, a yoke 230 is installed at the bottom of the electromagnetic force generator 208. In Figure 18, a yoke 240 covers the bottom and the side of the electromagnetic force generator 208. In Figure 19, a yoke 250 is arranged to cover the whole circumference of the electromagnetic force generator 208. Herein, a line path of magnetic force is provided by the yoke.

The features of the description, the claims and the drawings, single or in any combination, are patentable, as far as not excluded by the prior art. Each claim can depend on any one or more of the other claims. Preferred embodiments of the Invention:
1. An optical switch, comprising:
   an input block in which light is incident;
   an output block to which input light from the input block is transferred; and
   a reflector for performing a switching operation by reflecting input light from the input block;
   wherein the input block and the output block are arranged so as to make input light from the input block and reflected light reflected by the reflector and transferred to the output block have an acute angle less than 90 degrees.
2. The optical switch of embodiment 1, wherein the input block consists of a first input block and a second input block arranged to have an obtuse angle greater than 90 degrees therebetween, and the output block consists of a first output block and a second output block arranged to have an obtuse angle greater than 90 degrees therebetween.
3. The optical switch of embodiment 2, wherein the first input block and the second output block are arranged at a side of a package main body to have an acute angle therebetween, and the second input block and the first output block are arranged at the other side of the package main body to have an acute angle therebetween.
4. The optical switch of embodiment 1, wherein plural first input blocks and plural second input blocks are arranged to have an obtuse angle greater than 90 degrees therebetween, plural first output blocks and plural second output blocks are arranged to have an obtuse angle greater than 90 degrees, and the reflector is arranged at all positions at which a straight line between the first input blocks and the first output blocks and a straight line between the second input blocks and the second output blocks cross each other.
5. The optical switch of embodiment 4, wherein four first input blocks and four second input blocks are respectively arranged, and four first output blocks and four second output blocks are respectively arranged.
6. The optical switch of embodiment 4, wherein the first input block and the second output block are arranged at a side of a package main body to have an acute angle less than 90 degrees, and the second input block and the first output block are arranged at the other side of the package main body to have an acute angle less than 90 degrees.
7. An optical switch, comprising:
   an input block in which light is incident;
   an output block to which input light from the input block is transferred; and
   a reflector for performing a switching operation by reflecting input light from the input block;
   wherein the input block and the output block are arranged so as to make input light from the input block and reflected light reflected by the reflector and transferred to the output block have an obtuse angle greater than 90 degrees.
8. The optical switch of embodiment 7, wherein the input block consists of a first input block and a second input block arranged to have an acute angle less than 90 degrees therebetween, and the output block consists of a first output block and a second output block arranged to have an acute angle less than 90 degrees therebetween.
9. The optical switch of embodiment 8, wherein the first input block and the second output block are arranged at a side of a package main body to have an acute angle therebetween, and the second input block and the first output block are arranged at the other side of the package main body to have an acute angle therebetween.
10. The optical switch of embodiment 7, wherein plural first input blocks and plural second input blocks are arranged to have an acute angle less than 90 degrees therebetween, plural first output blocks and plural second output blocks are arranged to have an acute angle less than 90 degrees therebetween, and the reflector is arranged at all positions at which a straight line between the first input blocks and the first output blocks and a straight line between the second input blocks and the second output blocks cross each other.
11. The optical switch of embodiment 10, wherein four first input blocks, four second input blocks, four first output blocks, and four second output blocks are respectively arranged.
12. The optical switch of embodiment 10, wherein the first input blocks and the second output blocks are arranged at a side of a package main body to have an acute angle less than 90 degrees, and the first output blocks and the second output blocks are arranged at the other side of the package main body to have an acute angle less than 90 degrees.
13. The optical switch according to one of embodiment 1 or 7, further comprising:
   a drive unit for moving the reflector to a direction reflecting input light and a direction not reflecting input light.
14. The optical switch of embodiment 13, wherein the drive unit includes:
   a moving member connected with the reflector to move the reflector;
   a spring for supporting the moving member and making the moving member return to an initial state; and
   an electromagnetic force generator for moving the moving member when a current is applied and maintaining the moved state of the moving member when a current is not continually applied.
15. The optical switch of embodiment 14, wherein an end of the moving member is fixed to the spring, the other end thereof is arranged as a free end shape, a magnetic body is fixed thereto, and it is rotated-moved within a certain range by the action of the electromagnetic generator.
16. The optical switch of embodiment 15, wherein the magnetic body is made of a weakmagnetic material.
17. The optical switch of embodiment 15, wherein the magnetic body is made of a permanent magnet.
18. The optical switch of embodiment 14, wherein both ends of the spring are respectively supported by an optical switch main body, and it is constructed as a plate spring for generating a twisted elastic force.
19. The optical switch of embodiment 14, wherein the electromagnetic force generator includes:
   a core arranged at right angles to the free end of the moving member on which the magnet is adhered, made of a ferromagnetic material in order to rotate the moving member on which the magnet is fixed by generating a magnetic force when current is applied to a coil and maintain the moving member-rotated state by maintaining an electromagnetic force when the current applied to the coil is cut off; and
   a coil wound around the core to apply a current.
20. The optical switch of embodiment 19, wherein the electromagnetic force generator is arranged in a straight line on the moving member to make the moving member perform a reciprocating motion up and down.
21. The optical switch of embodiment 19, wherein a yoke for forming a magnetic path is formed at the bottom of the electromagnetic generator.
22. The optical switch of embodiment 19, wherein a yoke for forming a magnetic path is formed at the bottom and the side of the electromagnetic generator.
23. The optical switch of embodiment 19, wherein a yoke for forming a magnetic path is formed so as to cover the whole circumference of the electromagnetic generator.

## Claims

1. An optical switch comprising:
a drive unit for moving the reflector (18, 38) to a direction reflecting input light and a direction not reflecting input light,
wherein the drive unit includes:
a moving member (200) connected with the reflector (18, 38) to move the reflector (18, 38);
a spring (204) for supporting the moving member (200) and making the moving member (200) return to an initial state; and
an electromagnetic force generator (208) for moving the moving member (200) when a current is applied and maintaining the moved state of the moving member (200) when a current is not continually applied.

2. The optical switch of claim 1, wherein an end of the moving member (200) is fixed to the spring (204), the other end thereof is arranged as a free end shape, a magnetic body (206) is fixed thereto, and it is rotated-moved within a certain range by the action of the electromagnetic generator (208).

3. The optical switch of claim 2, wherein magnetic body (206) is made of a weakmagnetic material.

4. The optical switch of claim 2, wherein the magnetic body (206) is made of a permanent magnet.

5. The optical switch of claim 1, wherein both ends of the spring are respectively supported by an optical switch main body (202), and it is constructed as a plate spring for generating a twisted elastic force.

6. The optical switch of claim 1, wherein the electromagnetic force generator includes :
a core (210) arranged at right angles to the free end of the moving member (200) on which the magnet is adhered, made of a ferromagnetic material in order to rotate the moving member on which the magnet is fixed by generating a magnetic force when current is applied to a coil (212) and maintain the moving member-rotated state by maintaining an electromagnetic force when the current applied to the coil is cut off; and
a coil (212) wound around the core (210) to apply a current.

7. The optical switch of claim 6, wherein the electromagnetic force generator (208) is arranged in a straight line on the moving member (200) to make the moving member perform a reciprocating motion up and down.

8. The optical switch of claim 6, wherein a yoke (230; 240; 250) for forming a magnetic path is formed at the bottom of the electromagnetic generator (208).

9. The optical switch of claim 6, wherein a yoke (240) for forming a magnetic path is formed at the bottom and the side of the electromagnetic generator (208).

10. The optical switch of claim 6, wherein a yoke (250) for forming a magnetic path is formed so as to cover the whole circumference of the electromagnetic generator (208).
